# EUROPEAN PATENT APPLICATION

(11) **EP 0 942 343 A2**
(43) Date of publication of application: **15.09.1999**
(21) Application number: 99301830.8
(22) Date of filing: 11.03.1999
(51) Int. Cl.: G05B 19/409

(54) **Numerical control device**

(30) Priority: 11.03.1998 JP 7642798
(71) Applicant: Fanuc Ltd, Minamitsuru-gun, Yamanashi 401-0597 (JP)
(72) Inventor: Kurakake, Mitsuo, Tokyo 166-0012 (JP); Kinoshita, Jiro, 6-210 FANUC Manshonharimomi, Minamitsuru-gun, Yamanashi, 401-0511 (US); Kumakura, Tatsuro, Gotenba-shi, Shizuoka, 412-0026 (JP)
(74) Representative: Billington, Lawrence Emlyn

(57) **Abstract**

A numerical control device is composed of a numerical control portion and a display control portion. An operating system executable in semiconductor memory and software for display control are stored inside a ROM of the display control portion. A machine operation portion composed of a keyboard and a machine operation panel is connected to the display control portion, and communication between the machine operation portion and the numerical control device is performed in real-time. User created software is stored in a non-volatile memory through a communication port with a data I/O device and the stored software is executed. A display device and machine operation portion can be arranged close together to improve the operability even if the numerical control portion and the display control portion are separated.

## Description

The present invention relates to a numerical control device that controls machine tools or other machines.

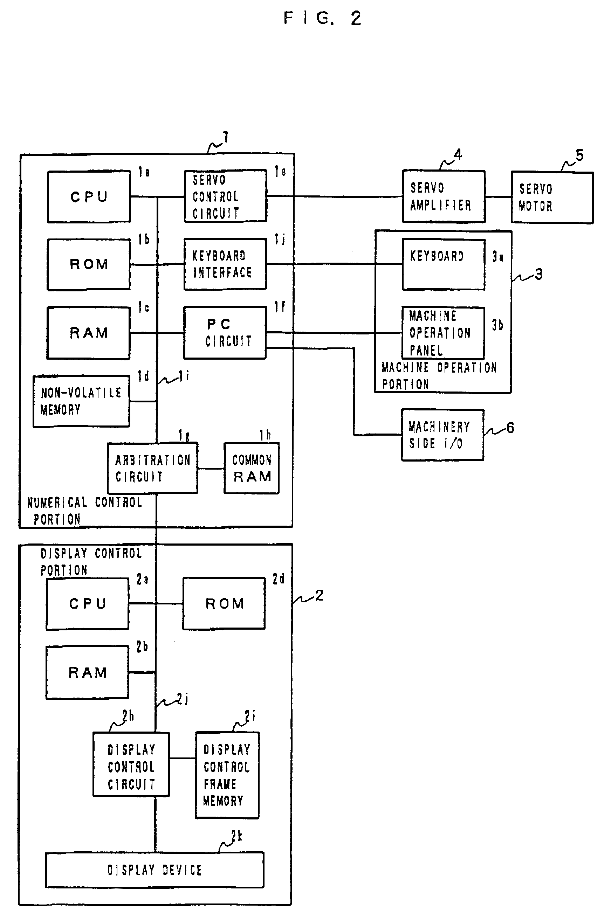

The block diagram of Fig. 2 describes a mode of a conventional numerical control device.

The numerical control device comprises numerical control portion 1, display control portion 2, and machine operation portion 3.

Machine operation portion 3 comprises keyboard 3a and machine operation panel 3b and is connected to numerical control portion 1.

Numerical control portion 1 includes processor 1a, ROM 1b which stores a system program executed by the processor 1a to control the entire numerical control device, RAM 1c that is used as work memory of primary storage data, flash memory such as non-volatile memory 1d which stores a machining program or similar program, servo control circuit le that handles servo control of servo motor 5 disposed in the machine, keyboard interface 1j, and programmable controller circuit (hereinafter referred to as PC circuit) 1f. These elements are connected to each other through bus 1i.

Servo motor 5 that drives a movable part of a machine through servo amplifier 4 is connected to servo control circuit 1e. Keyboard 3a of machine operation portion 3 is connected to the keyboard interface 1j. Machine operation panel 3b is connected to PC circuit 1f.

I/O circuit 6 disposed in the machine is connected to PC circuit If.

Arbitration circuit 1g is further connected to bus 1i of numerical control portion 1. Common RAM 1h is connected to arbitration circuit 1g. Furthermore, arbitration circuit 1g is connected to display control portion 2 through bus 2j.

Display control portion 2 includes processor 2a, ROM 2d, RAM 2b and display control circuit 2h. These elements are connected to each other through bus 2j.

A display control frame memory 2i and display device 2k are connected to display control circuit 2h. This display control frame memory 2i is also an element that comprises display control portion 2. Further, specialized software for display control is stored in ROM 2d. RAM 2b is used as work memory.

Processor 1a of numerical control portion 1 controls the numerical control device itself based on the system program stored in ROM 1b, reads and executes a user created machining program or similar program stored in non-volatile memory 1d, and then drives and controls servo motor 5 through servo control circuit 1e and servo amplifier 4.

Moreover, processor 1a receives commands from keyboard 3a and machine operation panel 3b through keyboard interface 1j and PC circuit 1f and carries out processing of input data. In addition, processor la drives servo motor 5 through servo control circuit le as described above.

Even further, processor la writes data to be displayed in display device 2k into the common RAM 1h through bus 1i and arbitration circuit 1g.

Processor 2a of display control portion 2 reads data written into common RAM 1h through arbitration circuit 1g, carries our processing based on the specialized software for display control, stored in ROM 2d, and then writes display data into display control frame memory 2i through display control circuit 2h. Moreover, display control circuit 2h reads data written in display control frame memory 21 and displays the data in display device 2k.

In the above description an outline of the composition and function of the conventional numerical control device shown in Fig. 2 was provided. However, in this conventional numerical control device, only the specialized software for display control is stored in ROM 2d of display control portion 2. For this reason, the display method is limited to this specialized software, therefore, it is impossible for a user to develop software with customization to incorporate it into display control portion 2 for use.

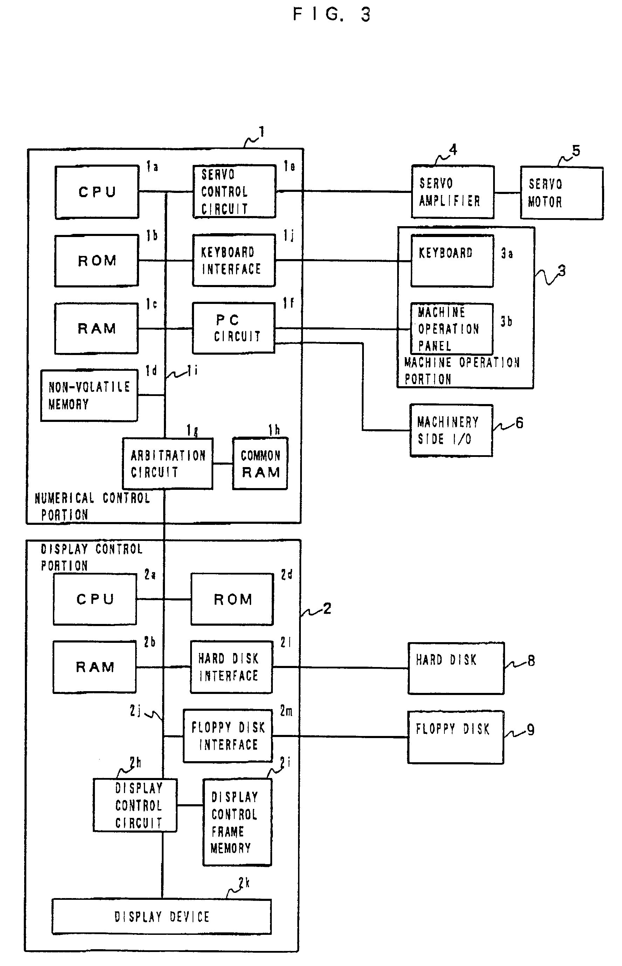

Thereupon, a numerical control device that uses a general purpose operating system in the display control portion as shown in Fig. 3 was developed as a numerical control device that can utilize user created software. In the following this numerical control device will be described.

The numerical control device shown in Fig. 3 has generally the same configuration as the numerical control device shown in Fig 2 (including configurations of their numerical control portions 1, machine operation portions 3), except for configuration of their display control portions 2.

This numerical control device shown in Fig. 3 differs from the numerical control device shown in Fig. 2 by the following points.
(a) Hard disk interface 21 and floppy disk interface 2m are connected to bus 2j in the display control portion 2, and hard disk 8 and floppy disk 9 are connected to each interface 2l, 2m, respectively.
(b) Only software for system boot is stored in ROM 2d.
Processor 2a uses this software for system boot to read a general-purpose operating system stored on hard disk 8, stores this operating system in RAM 2b. And the processor 2a of display control portion 2, using this operating system, carries out display control.

Because display control portion 2 of the numerical control device shown in Fig. 3 has a composition almost identical to a personal computer, a personal computer can be used as a display control portion 2.

Because the numerical control device shown in Fig. 3 uses a general purpose operating system in display control portion 2, user created software can be stored on a hard disk or a floppy disk and utilized. However, a drawback is the necessity of providing a hard disk or floppy disk with a large data storage capacity. In addition, the reliability of a hard disk or floppy disk decreases due to vibration or impact as well as other problems including a high degree of overall heat generation, the circuit structures growing larger causing the entire volume of display control portion 2 to increase.

Moreover, when numerical control portion I and display control portion 2 are integrated with each other, there is no problem if machine operation portion 3 is integrated with them. However, when numerical control portion 1 and display control portion 2 are separated, it is preferable to arrange machine operation portion 3 close to display control portion 2 (display device 2k) in order to simplify the monitoring of display device 2k while operating machine operation portion 3 of keyboard 3a and machine operation panel 3b, as there are many operations the operator must handle using keyboard 3a and machine operation panel 3b while monitoring the details of the display of display device 2k.

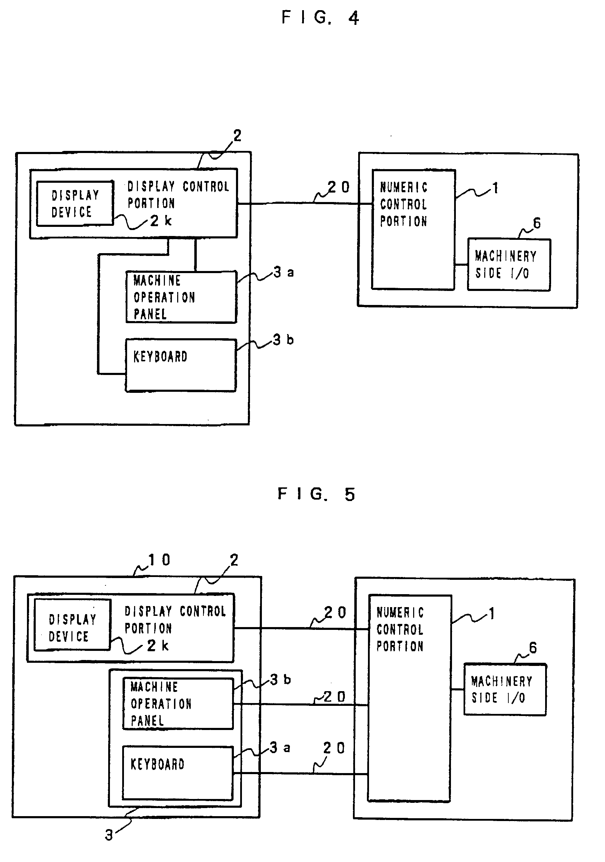

For this reason, conventionally, in the case where numerical control portion 1 and display control portion 2 are separated from each other as shown in Fig. 5, machine operation portion 3 is arranged close to display control portion 2 (Fig. 5 shows a composition in which display control portion 2 and machine operation portion 3 are integrated into one unit) and display control portion 2, keyboard 3a and machine operation panel 3b are connected to numerical control portion 1 by cables 20. As a result, the number of cables 20 increases, thereby complicating the connections to cause the installation environment of a numerical control device to become massive.

An object of the present invention is to improve the problem points the above-mentioned numerical control device has and to provide a numerical control device that can use user created software and does not require a mechanical device that has a storage device such as a hard disk.

Another object of the present invention is to provide a numerical control device that allows the installation and connection of a numerical control portion, display control portion and machine operation portion to be freely and easily carried out.

In order to achieve at least one of the above mentioned objects, a numerical control device according to the present invention comprises a display control portion comprised of a display device and a display control means, a numerical control portion that controls machinery and a machine operation portion composed of a keyboard and a machine operation panel that operates machinery, characterized in that said display control means comprise a micro processor, a semiconductor memory and an operating system executable on the semiconductor memory, and diagrams are displayed by said display device in accordance with data inputted from said machine operation panel and operation of said operating system.

This arrangement makes it possible to communicate with the numerical control portion in real-time without impediment even when the display control portion and the machine operation portion are connected. Moreover, a communication port or a card interface is provided in the display control portion to allow data such as software to be directly input through the communication port or the card interface.

According to embodiments of the present invention, by using a general purpose operating system executable in semiconductor memory, the use of a mechanism such as a hard disk is unnecessary. As a result, the composition was such that countermeasures for vibrations etc. are not required, thereby improving reliability. Further, because it is not necessary to use a hard disk or floppy disk, smaller sized and less heat producing numerical control devices can be designed.

Using a general-purpose operating system executable in semiconductor memory simplifies the use of user created software, making it possible to improve the usage conditions of the numerical control device.

Further, since the machine operation portion can be connected to the display control portion, the machine operation portion and display device can be arranged in one body or close to each other even when the numerical control portion and display control portion are separated from each other, thereby making efficient man-machine interface between the display device and input operation portion. In addition, cables are not necessary for connecting the machine operation portion to the numerical control portion even when separating the numerical control portion and display control portion from each other and arranging the numerical control portion on the display control portion side. Therefore, the number of connection cables can be reduced.

The machine operation portion can be connected to either the numerical control portion or the display control portion without any difference in function even when the numerical control portion and the display control portion integrated into one unit or when they are connected to each other using a cable as a bus connection or a serial communications connection. Because of this, it is possible to meet the needs of usability and construction of a mechanical device as well as to select a composition that allows the internal space of the mechanical device to be used most effectively.

The foregoing and other objects and features of the invention will become apparent from the following description of preferred embodiments of the present invention with respect to the accompanying drawings, in which:
Fig. 1 is a block diagram of the numerical control device of an embodiment of the present invention;
Fig. 2 is a block diagram of one mode of a conventional numerical control device;
Fig. 3 is a block diagram of another mode of a conventional numerical control device;
Fig. 4 is a block diagram showing when the numerical control portion and the display control portion are separated from each other and the machine operation portion is disposed on the display control portion side in the numerical control device shown in Fig. 1.
Fig. 5 is a block diagram showing when the numerical control portion and the display control portion are separated from each other and the machine operation portion is disposed on the display control portion side in a conventional numerical control device.

### DESCRIPTION OF THE PREFERRED EMBODIMENTS

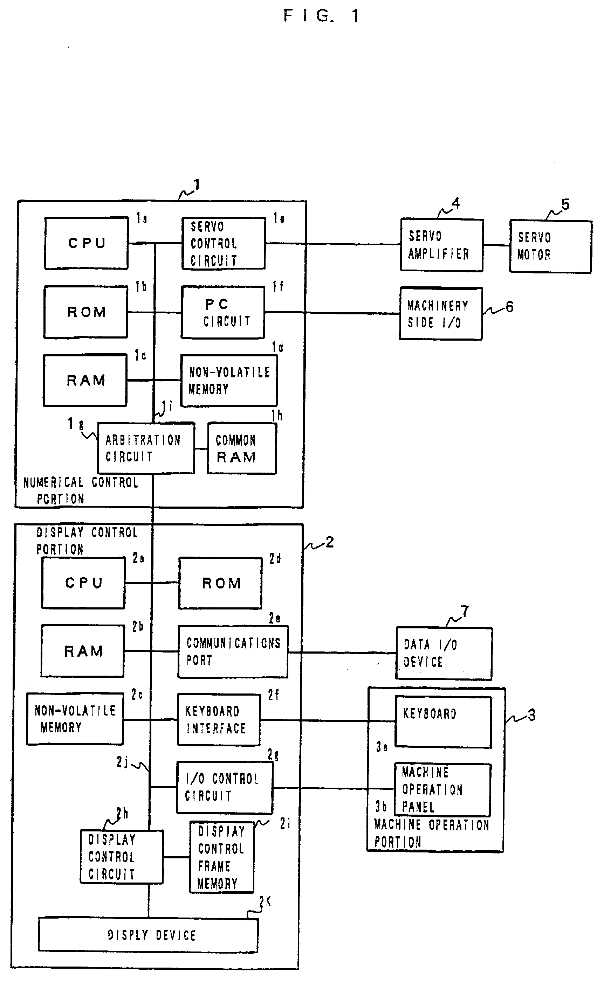

In the following, using the block diagram of Fig. 1, embodiments of a numerical control device of the present invention will be described. In the numerical control device shown in Fig. 1, for corresponding compositions of the numerical control devices shown in Fig. 2 and Fig. 3, identical symbols are used

Numerical control portion 1 of the numerical control device has a composition almost identical to the conventional numerical control devices shown in Fig. 2 and Fig. 3. However, only I/O circuit 6 on the machinery side is connected to PC circuit 1f and, contrary to the case of the numerical control portion 1 shown in Fig. 2 and Fig. 3, a machine operation panel is not connected to the PC circuit. Furthermore, contrary to the case of the numerical control portion 1 shown in Fig. 2 and Fig. 3, keyboard interface 1j is not connected to bus 1i.

Display control portion 2 of the numerical control device is comprised by processor 2a, RAM 2b, non-volatile memory (flash memory) 2c, ROM 2d, communications port 2e, keyboard interface 2f, I/O control circuit 2g, and display control circuit 2h. These elements are connected to each other by bus 2j.

Keyboard 3a is connected to keyboard interface 2f and I/O control circuit 2g is connected to machine operation panel 3b, so that machine operation portion 3 is connected to display control portion 2.

A general purpose operating system executable in semiconductor memory and software that executes display control are stored in ROM 2d.

Data I/O device 7 is connected to communications port 2e, allowing data, such as user created software, to be input. Further, keyboard 3a is connected to keyboard interface 2f and machine operation panel 3b is connected to I/O control circuit 2g, so that machine operation portion 3 is connected to display control portion 2.

Moreover, in place of or in addition to communications port 2e, a PCMCIA (Personal Computer Memory Card International Association) interface is connected to bus 2j to allow the use of a PC card. Then, user created software can be input using the PC card.

Display information sent from numerical control portion 1 is read into common RAM 1h through arbitration circuit 1g. Processor 2a of display control portion 2 reads the information written in common RAM 1h through arbitration circuit 1g, processes the information in accordance with display control software stored in ROM 2d, and then writes the processed information in display control frame memory 2i through display control circuit 2h. Display control circuit 2h reads the information written in display control frame memory 2i and then displays that information in display device 2k.

Further, as described above, because an operating system executable in semiconductor memory is stored in ROM 2d, user created software can be read through communications port 2e and data I/IO device 7. The user created software that is read is stored in non-volatile memory 2c. Then, the mode where display device 2k should display is controlled in accordance with the user created software.

By means of storing a simple operating system executable in semiconductor memory in ROM 2d, machine operation portion 3 and numerical control portion 1 are allowed to communicate in real-time even if machine operation portion 3 is connected to display control portion 2. As a result, even when numerical control portion 1 and display control portion 2 are separated from each other and a bus connection or serial connection is carried out between numerical control portion 1 and display control portion 2 using cables, machine operation portion 3 and numerical control portion 1 are allowed to communicate with each other in real-time, and further, display device 2k and machine operation portion 3 can be arranged close to each other to improve the operability.

In the conventional numerical control device shown in Fig. 3, an operating system is stored in RAM 2b of display control portion 2, so that keyboard 3a and machine operation panel 3b in machine operation portion 3 can be connected on the display control portion 2 side. However, since the operating system invoked in RAM 2b is a full general-purpose operating system invoked from a hard disk, real-time communication with numerical control portion 1 is difficult.

Because of this, a conventional numerical control device will not function efficiently when machine operation portion 3 is connected to display control portion 2, so that such connection has not been practiced in a conventional numerical control device. Therefore, when numerical control portion 2 and display control portion 2 are installed in different locations and separated from each other, and further, machine operation portion 3 including keyboard 3a and machine operation panel 3b is arranged integrally with, or close to, display control portion 2 (display device 2m), then machine operation portion 3 has to be connected to numerical control portion 1 using a cable, as shown in Fig. 5.

On the other hand, in the present invention, an operating system executable in a semiconductor memory is used, and machine operation portion 3 is connected to display control portion 2, arranged close to display device 2k, thereby allowing communication between machine operation portion 3 and numerical control portion 1 in real-time.

According to the present invention, when numerical control portion 1 and display control portion 2 are separated from each other and machine operation portion 3 (keyboard 3a and machine operation panel 3b) is arranged integral with display control portion 2, keyboard 3a and machine operation panel 3b need not be connected to numerical control portion 1 using a cable as shown in Fig. 4, thereby making it possible to achieve a numerical control device with less connection cables.

Further, when numerical control portion 1 and display control portion 2 are integrated into one unit, or when they are arranged close to each other so that display device 2k is arranged close to numerical control portion 1, it is a matter of course that machine operation portion 3 may be connected to numerical control portion 1, as in the conventional numerical control portion 1 shown in Fig. 2 and Fig. 3, not connect to display control portion 2 as shown in Fig. 1.

Even further, in the present invention, by providing an operating system in display control portion 2, it is possible to transfer and execute required software from numerical control portion 1 to display control portion 2 when power is applied or when necessary.

A plurality of software created by a user is stored for future use in non-volatile memory 1d of numerical control portion 1. For example, a user creates software A for machining preparation, and software B and C for machining in like manner to a conventional case, and store these softwares for future use in non-volatile memory 1d. Then, after power is applied, processor la of numerical control portion 1 writes software A for machining preparation, stored in non-volatile memory 1d, into common RAM 1h through arbitration circuit 1i. When this occurs, processor 1a of numerical control portion 1 reads this software A for machining preparation, stores it in non-volatile memory 2c, and displays various types of information related to machining preparation in display device 2k.

When an operator carries out machining preparation according to this displayed information. When the processing preparation is completed, either software B or C for machining are selected from, for example, keyboard 3a or machine operation panel 3b and the selected software is input as an instruction. When this occurs, this instruction is sent to numerical control portion 1. Numerical control portion 1 executes the instructed machining software to carry out the machining. Further, in like manner to the above description, this machining software is sent to display control portion 2 to be stored in non-volatile memory 2c of display control portion 2, and then this machining software is displayed in display device 2k.

By freely selecting and instructing user created software stored in non-volatile memory 1d of numerical control portion 1 in this manner, the selected software can be transferred to non-volatile memory 2c of display control portion 2 and executed. Therefore, it is not necessary to use a high capacity memory for non-volatile memory 2c. A memory capacity of a degree that allows one piece of software to be stored is sufficient.

## Claims

1. A numerical control device comprising:
a display control portion comprised of a display device and a display control means;
a numerical control portion that controls machinery; and
a machine operation portion composed of a keyboard and a machine operation panel that operates machinery,
characterized in that said display control means comprise a micro processor, a semiconductor memory and an operating system executable on the semiconductor memory, and diagrams are displayed by said display device in accordance with data inputted from said machine operation panel and operation of said operating system.

2. The numerical control device according to claim 1, wherein said display control portion, machine operation portion and numerical control portion are integrated into one unit.

3. The numerical control device according to claim 1, wherein said display control portion, machine operation portion and numerical control portion are arranged separately from one another.

4. The numerical control device according to claim 1, wherein said machine operation portion is constructed integral with either one of said display control portion or said numerical control portion.

5. The numerical control device according to any preceding claim, wherein a data transmission/reception circuit of said machine operation portion is disposed within said display control portion, allowing said machine operation portion to be connected to said display control portion.

6. The numerical control device according to any preceding claim, wherein a region usable by a user is provided in said semiconductor memory in the display control means and a user created software is stored and executed in that region of the semiconductor memory.

7. The numerical control device according to claim 6, wherein a communication port or a card type interface is provided in said display control portion, allowing data to be inputted through said communication port or said card interface.

8. The numerical control device according to any preceding claim, wherein a memory that stores user created software is provided in said numerical control portion, and when power is applied or when necessary, said software stored in the numerical control portion is transmitted to said display control portion, where the transmitted software is executed.

9. A numerical control device comprising:
a numerical control portion that connects to an I/O circuit disposed in the machine;
a display control portion comprising a display device;
a machine operation portion that includes a data I/O device; whein:
said display control portion has a semiconductor memory in which a simple operating system is stored executable in said semiconductor memory only;
and said machine operation portion is connected to said display control portion.

10. The numerical control device according to claim 9, wherein said display control portion comprises a second semiconductor memory to store software that executes under said operating system, in addition to the said first semiconductor memory that stores said operating system.

11. The numerical control device according to claim 10, wherein said second semiconductor memory is writable and readable, and software is written into said second semiconductor memory through said data I/O device of said machine operation portion connected to said display control portion.
